# EUROPÄISCHE PATENTSCHRIFT

(11) **EP 2 180 537 B1**
(45) Veröffentlichungstag und Bekanntmachung des Hinweises auf die Patenterteilung: **30.04.2014**
(21) Anmeldenummer: 09012719.2
(22) Anmeldetag: 07.10.2009
(51) Int. Cl.: H01M 2/02, H01M 2/10, H01M 2/34, B32B 7/02, B32B 15/08, B32B 15/14, B32B 15/20, H01M 6/50, H01M 10/052

(54) **Galvanische Zelle für einen Akkumulator**
Galvanic cell for a rechargeable battery
Cellule galvanique pour un accumulateur

(30) Priorität: 23.10.2008 DE 102008053011
(43) Veröffentlichungstag der Anmeldung: 28.04.2010
(73) Patentinhaber: Li-Tec Battery GmbH, 01917 Kamenz (DE)
(72) Erfinder: Schäfer, Tim, 99768 Harztor (DE); Gutsch, Andreas, Dr., 59348 Lüdinghausen (DE)
(74) Vertreter: Wallinger, Michael

(56) Entgegenhaltungen:
- EP-A- 1 976 043
- EP-A1- 1 079 450
- EP-A1- 1 981 100
- EP-A2- 0 862 230
- EP-A2- 1 146 579
- WO-A-2005/122294
- JP-A- 59 146 166
- US-A- 4 664 994
- US-A1- 2006 073 383
- US-B1- 6 391 491
- "Technisches Datenblatt: PET Polyethylenterephtalat" [Online] 7. Januar 2010 (2010-01-07), MERK & PARTNER GMBH , ULM, GERMANY , XP002562120 Gefunden im Internet: URL:http://www.merk-partner.de/images/stor ies/datenblaetter/PET%20Polyethylenterepht alat.pdf> [gefunden am 2010-01-07] * das ganze Dokument *
- "Technisches Datenblatt: PP Polypropylen" [Online] 7. Januar 2010 (2010-01-07), MERK & PARTNER GMBH , ULM, GERMANY , XP002562121 Gefunden im Internet: URL:http://www.merk-partner.de/images/stor ies/datenblaetter/PP%20Polypropylen.pdf> [gefunden am 2010-01-07] * das ganze Dokument *
- "Technisches Datenblatt: PE Polyethylen" [Online] 7. Januar 2010 (2010-01-07), MERK & PARTNER GMBH , MERK & PARTNER GMBH , XP002562200 Gefunden im Internet: URL:http://www.merk-partner.de/images/stor ies/datenblaetter/PE%20Polyethylen.pdf> [gefunden am 2010-01-07] * das ganze Dokument *

## Beschreibung

Die vorliegende Erfindung betrifft eine galvanische Zelle für einen Akkumulator. Die Erfindung wird im Zusammenhang mit Lithium-Ionen-Akkumulatoren zur Versorgung von KFZ-Antrieben beschrieben. Es wird darauf hingewiesen, dass die Erfindung auch unabhängig von der Bauart des Akkumulators oder unabhängig von der Art des versorgten Antriebs Verwendung finden kann.

Aus dem Stand der Technik sind Akkumulatoren mit mehreren galvanischen Zellen zur Versorgung von KFZ-Antrieben bekannt.

Die EP 1 981 100 A1 beschreibt ein Batteriepack mit einer Sekundärbatterie mit einem nichtwässrigen Elektrolyten und einer Schutzschaltung. Die Sekundärbatterie enthält ein Batterieelement und eine flexible Umhüllung aus einem laminierten Film, einer heißverklebten Schicht, einer Metallschicht und einer äußerten Schicht.

Die EP 1 079 450 A1 beschreibt einen drucksensitiven Unterbrecher für eine Batterie, der in einer Ausnehmung der Innenseite der Umhüllung der Batterie untergebracht ist.

Die US 6,391,491 B1 beschreibt eine Lithium-Sekundärbatterie, eingehüllt in einen Beutel und eine Sicherheitseinrichtung. In der Lithium-Sekundärbatterie, ist ein Aluminium-Terminal angeordnet und erstreckt sich auf der Rückseite des Beutels und um die Vorder-und Bodenflächen der Batterie. Der erweiterte Terminal verfügt über einen schmaleren Bereich im mittleren Teil und ist um den Beutel mit einem Klebeband fixiert. Die schmalere Abschnitt bricht, wenn der Beutel schwillt, insbesondere aufgrund eines zunehmenden Innendrucks.

Einigen Bauarten ist gemein, dass die Umgebung dieser Akkumulatoren nach Versagen einer galvanischen Zelle auch mit Austritt des Zellinhalts gefährdet wird.

Der Erfindung liegt daher die Aufgabe zugrunde, den Austritt von Bestandteilen einer galvanischen Zelle als Folge eines Versagens oder einer Beschädigung der Zelle zu verhindern. Das wird erfindungsgemäß durch den Gegenstand der unabhängigen Ansprüche erreicht. Zu bevorzugende Weiterbildungen der Erfindung sind Gegenstand der Unteransprüche.

Eine erfindungsgemäße galvanische Zelle weist wenigstens einen Stromableiter und eine Umhüllung auf. Diese Umhüllung umgibt diese galvanische Zelle wenigstens teilweise. Der Umhüllung ist ein Verbindungsbereich zugeordnet. Innerhalb des Verbindungsbereichs ist die Umhüllung wenigstens teilweise stoffschlüssig mit dem Stromableiter verbunden. Die Umhüllung weist wenigstens eine erste Schicht und eine zweite Schicht auf. Der Werkstoff dieser ersten Schicht und der Werkstoff der zweiten Schicht der Umhüllung unterscheiden sich durch wenigstens einen chemischen Stoff. Mit der Umhüllung ist wenigstens eine erste, als flache metallische Ader ausgebildete Stromleiteinrichtung (8) wenigstens teilweise stoffschlüssig verbunden, deren elektrisch leitender Querschnitt sich bei einer Dehnung der Umhüllung verringert, so dass der elektrische Widerstand dieser Stromleiteinrichtung sich erhöht. Diese oder wenigstens eine dieser ersten Stromleiteinrichtungen ist wenigstens mittelbar elektrisch mit einem Stromableiter verbunden. Wenigstens eine der Schichten der Umhüllung weist mindestens einen ersten Werkstoff und einen zweiten Werkstoff auf. Der zweite Werkstoff weist einen höheren Elastizitätsmodul als der erste Werkstoff auf. Der zweite Werkstoff ist in Gestalt von Fasern ausbildet ist und die Fasern sind mit dem ersten Werkstoff wenigstens teilweise stoffschlüssig verbunden. Vorliegend handelt es sich bei einer galvanischen Zelle um eine Vorrichtung zur Speicherung von Energie. Eine zugeführte Menge elektrischer Energie wird bei Speicherung in der galvanischen Zelle in chemische Energie gewandelt. Bei der Entnahme von Energie, etwa zur Versorgung eines elektrischen Antriebs eines KFZ-Antriebs, wird die gespeicherte chemische Energie zunächst wieder in elektrische Energie gewandelt. Üblicherweise weist eine galvanische Zelle zwei Elektroden und einen Elektrolyt zur Ionenleitung zwischen diesen Elektroden auf. Eine Elektrode der erfindungsgemäßen galvanischen Zelle weist eine aktive Elektrodenmasse auf, welche der Speicherung der Energie in chemischer Form dient. Bei ungeplanter Veränderung der Zellchemie kann die galvanische Zelle versagen. Auch der Elektrolyt kann für die Umgebung schädlich sein.

Die erfindungsgemäße galvanische Zelle weist wenigstens einen Stromableiter auf. Vorliegend wird unter einem Stromableiter eine Einrichtung verstanden, die wenigstens elektrisch im Kontakt mit einer aktiven Elektrodenmasse der galvanischen Zelle steht. Der Stromableiter führt dieser aktiven Elektrodenmasse Elektronen zu oder ab. Der Stromableiter ist mit einem elektrischen Kabel zur Durchleitung von Elektronen verbunden. Ein derartiger Stromableiter kann der Anode oder der Kathode der galvanischen Zelle zugeordnet sein. Vorzugsweise weist die erfindungsgemäße galvanische Zelle zu jeder aktiven Elektrodenmasse einen eigenen Stromableiter auf. Beispielsweise ist der Stromableiter als Metallfolie ausgebildet. Es kommen aber auch andere Geometrien und/oder elektrisch leitende Werkstoffe entsprechend den Anforderungen an die galvanische Zelle bzw. an den Akkumulator in Frage.

Weiter weist die erfindungsgemäße galvanische Zelle eine Umhüllung auf. Diese Umhüllung dient der Trennung der chemisch wirksamen und energiespeichernden Teile der galvanischen Zelle von der Umgebung. So wird der Austausch von chemischen Stoffen zwischen der galvanischen Zelle und der Umgebung weitgehend vermieden. Insbesondere bei einer galvanischen Zelle, deren Elektrolyt Lithium-lonen aufweist, ist eine Wechselwirkung mit Wasser auch wegen heftiger chemischer Reaktionen unerwünscht. So dient die Umhüllung beispielsweise dazu, den Zutritt von Wasser bzw. Wasserdampf weitgehend zu unterbinden. Auch anderen schädigenden chemischen Stoffen wird der Zutritt in das Innere der galvanischen Zelle verwehrt. Die Umhüllung wirkt auch dem Austritt chemischer Stoffe aus der galvanischen Zelle entgegen. So wird vermieden, dass beispielsweise der Elektrolyt oder andere chemische Stoffe aus der galvanischen Zelle mit der Umgebung wechselwirken. Wenigstens teilweise ist die galvanische Zelle von der Umhüllung umgeben. Vorzugsweise umgibt die Umhüllung die galvanische Zelle nahezu vollständig. Vorzugsweise reicht lediglich wenigstens ein elektrischer Leiter, welcher in elektrischer Wirkverbindung mit einem Stromableiter steht, oder wenigstens dieser Stromableiter aus der galvanischen Zelle aus der Umhüllung.

Der Umhüllung ist ein Verbindungsbereich zugeordnet. Innerhalb dieses Verbindungsbereichs ist die Umhüllung wenigstens teilweise mit dem Stromableiter verbunden. Diese teilweise Verbindung dient der Abdichtung der Umhüllung und/oder der galvanischen Zelle gegen die Umgebung. Bevorzugt ist diese Verbindung stoffschlüssig ausgeführt. Die Erzeugung der Verbindung der Umhüllung mit dem wenigstens einen Stromableiter ist auch von den verwendeten Werkstoffen abhängig. Beispielsweise kann eine stoffschlüssige Verbindung durch Kleben oder Anwendung eines Schweißverfahrens erzeugt werden. Sofern die Umhüllung Kunststoff aufweist, kann die stoffschlüssige Verbindung beispielsweise durch Ultraschallschweißen erzeugt werden. Es ist nicht erforderlich, dass die Umhüllung vollflächig mit dem wenigstens einen Stromableiter verbunden ist. Eine streifenförmige Verbindung entlang einer freien Kante der Umhüllung mit dem wenigstens einen Stromableiter kann zur Abdichtung ausreichen.

Die Umhüllung weist wenigstens eine erste Schicht und eine zweite Schicht auf. Diese Schichten sind bevorzugt vollflächig ausgebildet und stoffschlüssig miteinander verbunden, so dass ein Schichtverbund entsteht. Es ist aber nicht erforderlich, dass beide Schichten der Umhüllung zur Erfüllung der Anforderungen vollflächig ausgebildet sind. Die Schichtdicken sind anforderungsgerecht gewählt. Die Ausbildung verschiedener Schichten dient der Erfüllung mehrerer unterschiedlicher Anforderungen an die Umhüllung. Vorteilhaft erfüllt die äußere Schicht die Aufgabe der Abdichtung, während die innere Schicht gegenüber der Zellchemie unempfindlich oder beständig ist. Vorteilhaft ist eine dieser Schichten bei Umgebungsdruck für Wasserdampf undurchlässig. Dabei sind unter Umgebungsdruck solche Drücke zu verstehen, welche während des Betriebs der galvanischen Zelle auf diese wirken oder denen die galvanische Zelle zu anderen Zeiten ausgesetzt ist.

Der Werkstoff dieser ersten und der Werkstoff dieser zweiten Schicht unterscheiden sich durch wenigstens einen chemischen Stoff. Bei diesem chemischen Stoff handelt es sich um einen Reinstoff, d.h. ein Element oder eine Verbindung, oder ein homogenes bzw. heterogenes Stoffgemisch. So können die Schichten die an sie unterschiedlich gestellten Aufgaben erfüllen. Vorteilhaft weist die äußere Schicht beispielsweise ein Metall zur Unterstützung der Dichtwirkung der Umhüllung auf. Die äußere Schicht ist von der inneren Schicht gegen die Zellchemie abgedeckt, so dass eine chemische Wechselwirkung zwischen der Zellchemie und der äußeren Schicht vermieden ist. Bevorzugt ist der inneren Schicht ein chemischer Stoff zur Erhöhung der Widerstandsfähigkeit dieser Schicht gegenüber der Zellchemie beigegeben.

So wird der Austritt des Inhalts der erfindungsgemäßen galvanischen Zelle verhindert, der Zutritt eines unerwünschten Stoffs in die galvanische Zelle verhindert und die zugrunde liegende Aufgabe gelöst.

Nachfolgend werden zu bevorzugende Weiterbildungen der Erfindung beschrieben.

Vorteilhaft weist wenigstens eine der Schichten zwei verschiedene Werkstoffe auf. So ist es möglich, eine Schicht der Umhüllung besonders anforderungsgerecht auszubilden.
Vorteilhaft werden in den ersten Werkstoff der Schicht Teilchen aus einem zweiten Werkstoff eingebettet. Der erste und der zweite Werkstoff dieser Schicht weisen je nach Anforderung unterschiedliche Geometrien auf. Diese zwei Werkstoffe können zeitgleich zur ersten Schicht verarbeitet werden.
Vorteilhaft wird ein Werkstoff vor Zugabe des anderen Werkstoffs in einer dafür vorgesehenen Vorrichtung angeordnet oder eingelegt.
Vorzugsweise weist ein Werkstoff eine höhere thermische Leitfähigkeit als der andere Werkstoff auf, ohne elektrisch leitfähig zu sein.
Vorteilhaft werden verschiedene Polymere als erster und zweiter Werkstoff verwendet. Dabei wird ein Polymer von den chemischen Stoffen der galvanischen Zelle weniger angegriffen, als das andere Polymer, welches eine bessere Dichtwirkung leistet und/oder preisgünstiger ist. Beispielsweise sind die Polymere einer Gruppe entnommen, welche PP, PE, PVC enthält.

Vorteilhaft weist der zweite Werkstoff einen höheren Elastizitätsmodul als der erste Werkstoff auf.
Der zweite Werkstoff liegt vorteilhaft als stäbchenförmige Gebilde, besonders bevorzugt als schlanke und kurze Fasern vor. Die Fasern sind mit dem ersten Werkstoff wenigstens teilweise stoffschlüssig verbunden. Dabei stellt der erste Werkstoff stoffschlüssige Verbindungen zwischen getrennten Fasern bzw. Gruppierungen von Fasern her. Dabei sind die Fasern wenigstens teilweise von dem ersten Werkstoff umschlossen.
Vorteilhaft sind diese Fasern wenigstens teilweise miteinander zu wenigstens einem ersten fadenartigen Gebilde verbunden. Ein erstes fadenartiges Gebilde ist schlank bzw. weist im Vergleich zu seiner Länge einen geringen Durchmesser auf. Der Durchmesser eines ersten fadenartigen Gebildes beträgt bevorzugt weniger als 1/10 von dessen Länge, besonders bevorzugt weniger als 1/100 dieser Länge. Vorteilhaft stehen mehrere erste fadenartige Gebilde zueinander in Bezug. Mehrere erste fadenartige Gebilde sind beispielsweise miteinander verwoben, ähnlich wie Textilien.
Bevorzugt sind mehrere erste fadenartige Gebilde als geschichtete Gelege angeordnet, wobei die Orientierungen verschiedener Schichten eines Geleges voneinander abweichen. Besonders bevorzugt sind die Orientierungen der Schichten eines Geleges oder Gewebes im Wesentlichen rechtwinkelig zueinander angeordnet. Allerdings weisen auch Winkel von 30°, 45°, 60° zwischen diesen Orientierungen besondere Vorteile hinsichtlich der Aufnahme von Kräften oder anderen mechanischen Eigenschaften eines Geleges oder Gewebes auf. Bevorzugt sind innerhalb der Umhüllung mehrere dieser ersten fadenartigen Gebilde in Richtung von Zugkräften angeordnet.
Bevorzugt besteht zwischen zwei dieser ersten fadenartigen Gebilde im Vergleich zu deren Durchmesser auch ein deutlicher Abstand.
Bevorzugt sind mehrere erste fadenartige Gebilde netzförmig zusammengelegt. Beispielsweise ist als zweiter Werkstoff Glas, Kohlenstoff oder ein Aramid gewählt. Als erster Werkstoff sind aushärtbare Polymere geeignet, beispielsweise EP, UP.

Vorteilhaft ist der Umhüllung wenigstens eine erste Stromleiteinrichtung zugeordnet. Die erste Stromleiteinrichtung ist wenigstens mittelbar elektrisch mit einem Stromableiter verbunden.
Bevorzugt ist der Umhüllung für jeden vorhandenen Stromableiter eine erste Stromleiteinrichtung zugeordnet.
Bevorzugt ist eine solche erste Stromleiteinrichtung als metallische flache Ader ausgebildet, welche wenigstens teilweise von der Umhüllung umschlossen ist. Auch kann die erste Stromleiteinrichtung auf einer Außenfläche der Umhüllung angeordnet sein.
Besonders bevorzugt ist die Stromleiteinrichtung wenigstens teilweise mit der Umhüllung stoffschlüssig verbunden.
Bevorzugt ist die Stromleiteinrichtung gegen die Umgebung wenigstens elektrisch isoliert.
Wenn die Umhüllung der galvanischen Zelle zerstört oder wenigstens teilweise beschädigt wird, so wird mit hoher Wahrscheinlichkeit auch eine der Stromleiteinrichtungen verletzt. Anschließend kann mit der galvanischen Zelle keine Energie mehr ausgetauscht werden.

Vorteilhaft ist diese wenigstens eine erste Stromleiteinrichtung aus einem Werkstoff ausgebildet, welcher eine geringere Bruchdehnung aufweist, als die Werkstoffe der Umhüllung. Weiter ist diese wenigstens eine erste Stromleiteinrichtung bevorzugt stoffschlüssig mit der Umhüllung verbunden.
Sofern sich die Umhüllung dehnt, verringert sich bevorzugt der leitende Querschnitt der ersten Stromleiteinrichtung. So wird deren elektrischer Widerstand erhöht.
Sofern sich die Umhüllung bedeutsam ausdehnt, folgt bei geeigneter Wahl des Werkstoffs bzw. der Geometrie das Zerreißen der ersten Stromleiteinrichtung. Eine erste Stromleiteinrichtung weist besonders bevorzugt wenigstens eine Dünnstelle auf, welche in einem Bereich der Umhüllung angeordnet ist, der sich besonders stark dehnen kann. So reißt die Stromleiteinrichtung, bevor die Umhüllung versagt.
Nach Reißen einer ersten Stromleiteinrichtung kann mit der galvanischen Zelle keine elektrische Energie mehr ausgetauscht werden. Das ist von Vorteil, wenn sich die Umhüllung beispielsweise in Folge von starker Temperaturerhöhung oder bedeutsamer Gasbildung innerhalb der Umhüllung stark ausdehnt.

Vorteilhaft weist die Umhüllung weiter wenigstens eine erste Sensoreinrichtung auf. Vorliegend ist unter einer ersten Sensoreinrichtung beispielsweise eine Temperaturmesseinrichtung, ein Piezo-Element, ein Dehnmessstreifen oder eine andere Messeinrichtung zu verstehen, welche Aufschluss über einen unerwünschten Zustand der galvanischen Zelle gibt. Das kann auch eine, auf einer Außenfläche der Umhüllung angebrachte, Einrichtung sein, die auf das Vorhandensein von Chemikalien des Zellinneren reagiert.
Vorzugsweise ist die Sensoreinrichtung stoffschlüssig mit der Umhüllung verbunden.
Eine erste Sensoreinrichtungen ist bevorzugt mit einer Speicher- bzw. Meldeeinrichtung verbunden sein. Diese kann der betreffenden galvanischen Zelle, einer Gruppe von galvanischen Zellen oder auch dem Akkumulator zugeordnet sein.

Vorteilhaft weist ein Akkumulator wenigstens eine erfindungsgemäße galvanische Zelle, oder eine ihrer vorteilhaften Weiterbildungen, sowie eine Wandung auf. Diese Wandung dient auch dem Schutz der wenigstens einen galvanischen Zelle vor schädigenden mechanischen Einwirkungen.
Die Wandung ist bevorzugt entlang der Außenflächen enthaltener galvanischer Zellen ausgebildet, welche besonderen Gefährdungen ausgesetzt sind. Bevorzugt ist die Wandung wärmedämmend, flammhemmend und/oder beständig gegenüber Chemikalien, welche eine galvanische Zelle bzw. deren Umhüllung gefährden, ausgebildet.
Die Stärke der Wandung ist bevorzugt beanspruchungsgerecht ausgebildet.

Vorteilhaft weist wenigstens die Wandung zwei verschiedene Werkstoffe auf. So ist es möglich, die Wandung besonders anforderungsgerecht auszubilden. Der dritte und der vierte Werkstoff dieser Schicht weisen je nach Anforderung auch unterschiedliche Geometrien auf.
Vorteilhaft werden in den dritten Werkstoff der Wandung Teilchen aus einem vierten, mechanisch besonders belastbaren, Werkstoff eingebettet.
Diese zwei Werkstoffe können zeitgleich zur Wandung verarbeitet werden. Vorteilhaft wird ein Werkstoff vor Zugabe des anderen Werkstoffs in eine dafür vorgesehene Vorrichtung angeordnet oder eingelegt.
Vorzugsweise weist ein Werkstoff eine höhere thermische Leitfähigkeit als der andere Werkstoff auf.

Vorteilhaft weist dieser vierte Werkstoff einen höheren Elastizitätsmodul als der dritte Werkstoff auf.
Geometrisch liegt der vierte Werkstoff vorteilhaft als stäbchenförmige Gebilde, besonders bevorzugt als schlanke und kurze Fasern vor. Die Fasern sind mit dem dritten Werkstoff wenigstens teilweise stoffschlüssig verbunden. Dabei stellt der dritte Werkstoff stoffschlüssige Verbindungen zwischen einzelnen Fasern bzw. Gruppierungen von Fasern her. Dabei sind die Fasern wenigstens teilweise von dem dritten Werkstoff umschlossen.
Vorteilhaft sind die Fasern wenigstens teilweise miteinander zu zweiten fadenartigen Gebilden verbunden. Diese zweiten fadenartigen Gebilde sind schlank bzw. weisen einen geringen Durchmesser im Vergleich zu ihrer Länge auf. Der Durchmesser eines zweiten fadenartigen Gebildes beträgt bevorzugt weniger als 1/10 von dessen Länge, besonders bevorzugt weniger als 1/100 von dessen Länge. Vorteilhaft stehen mehrere zweite fadenartige Gebilde zueinander in Bezug. Mehrerer solcher zweiter fadenartiger Gebilde sind beispielsweise miteinander verwoben, ähnlich wie Textilien.
Bevorzugt können mehrere zweite fadenartige Gebilde als geschichtete Gelege angeordnet sein, wobei die Orientierungen verschiedener Schichten eines Geleges voneinander abweichen. Besonders bevorzugt sind die Orientierungen der Schichten eines Geleges bzw. Gewebes im Wesentlichen rechtwinkelig zueinander angeordnet. Allerdings weisen auch Winkel zwischen diesen wesentlichen Orientierungen von ungefähr 30°, 45°, 60° besondere Vorteile hinsichtlich der Aufnahme von Kräften oder anderen mechanischen Eigenschaften eines Geleges bzw. Gewebes auf.
Bevorzugt sind innerhalb der Umhüllung mehrere der zweiten fadenartigen Gebilde in Richtung von Zugkräften angeordnet.
Bevorzugt besteht zwischen zwei dieser zweiten fadenartigen Gebilde auch ein deutlicher Abstand im Vergleich zu deren Durchmesser.
Bevorzugt sind mehrere zweite fadenartige Gebilde netzförmig zusammengelegt.

Vorteilhaft ist der Wandung wenigstens eine zweite Stromleiteinrichtung zugeordnet. Die zweite Stromleiteinrichtung ist wenigstens mittelbar elektrisch einer galvanischen Zelle oder einer Gruppe von galvanischen Zellen verbunden.
Bevorzugt ist der Wandung für jede vorhandene galvanische Zelle oder jeder Gruppe von galvanischen Zellen eine zweite Stromleiteinrichtung zugeordnet. Bevorzugt ist eine solche zweite Stromleiteinrichtung als metallische flache Ader ausgebildet, welche wenigstens teilweise von der Wandung umschlossen ist. Auch kann die zweite Stromleiteinrichtung auf einer Außenfläche der Wandung angeordnet sein.
Besonders bevorzugt ist die Stromleiteinrichtung mit der Wandung stoffschlüssig verbunden.
Bevorzugt ist die Stromleiteinrichtung gegen die Umgebung wenigstens elektrisch isoliert.
Wenn die Wandung das Akkumulators zerstört oder wenigstens teilweise beschädigt wird, so wird mit hoher Wahrscheinlichkeit auch eine der zweiten Stromleiteinrichtungen verletzt. Anschließend kann mit einer galvanischen Zelle, oder einer Gruppe galvanischer Zellen, keine Energie mehr ausgetauscht werden.

Vorteilhaft ist diese wenigstens eine zweite Stromleiteinrichtung aus einem Werkstoff ausgebildet, welcher eine geringere Bruchdehnung aufweist, als die Werkstoffe der Wandung. Weiter ist diese wenigstens eine zweite Stromleiteinrichtung bevorzugt stoffschlüssig mit der Wandung verbunden.
Sofern sich die Wandung dehnt oder verformt, verringert sich bevorzugt der leitende Querschnitt der zweiten Stromleiteinrichtung. So wird deren elektrischer Widerstand erhöht.
Sofern sich die Wandung bedeutsam ausdehnt, folgt bei geeigneter Wahl des Werkstoffs bzw. der Geometrie das Zerreißen der zweiten Stromleiteinrichtung. Eine zweite Stromleiteinrichtung weist besonders bevorzugt wenigstens eine Dünnstelle auf, welche in einem Bereich der Wandung angeordnet ist, der sich besonders stark dehnen kann. So reißt die zweite Stromleiteinrichtung, bevor die Wandung versagt. Nach Reißen einer zweiten Stromleiteinrichtung kann mit der galvanischen Zelle oder der Gruppe von galvanischen Zellen keine elektrische Energie mehr ausgetauscht werden. Das ist von Vorteil, wenn sich die Wandung beispielsweise in Folge von starker mechanischer Beanspruchung stark verformt.

Vorteilhaft weist die Wandung weiter wenigstens eine zweite Sensoreinrichtung auf. Vorliegend ist unter einer zweiten Sensoreinrichtung beispielsweise eine Temperaturmesseinrichtung, ein Piezo-Element, ein Dehnmessstreifen
oder eine andere Messeinrichtung zu verstehen, welche Aufschluss über einen unerwünschten Zustand einer galvanischen Zelle oder der Wandung geben können. Das kann auch eine, auf einer Außenfläche der Wandung angebrachte, Einrichtung sein, die auf das Vorhandensein von Chemikalien des Zellinneren reagiert.
Vorzugsweise ist die zweite Sensoreinrichtung stoffschlüssig mit der Wandung verbunden.
Eine zweite Sensoreinrichtung ist bevorzugt mit einer Speicher- bzw. Meldeeinrichtung verbunden. Diese kann sowohl der Wandung als auch dem Akkumulator zugeordnet sein.

Vorteilhaft weist ein Akkumulator wenigstens eine Dämpfungseinrichtung auf. Die Dämpfungseinrichtung dient der Verringerung möglicherweise schädigender Folgen mechanischer Beanspruchung der galvanischen Zellen des Akkumulators. Bei der mechanischen Beanspruchung kann es sich um eine schwingende Beanspruchung und/oder Stöße handeln.
Bevorzugt ist die Dämpfungseinrichtung zur Aufnahme von Energie durch Verformung geeignet. Dabei zeigt die Dämpfungseinrichtung elastisches und/oder viskoses Verhalten als Antwort auf eine Beanspruchung. Einer ausreichend geringen Beanspruchung begegnet die Dämpfungseinrichtung ausschließlich mit elastischer Verformung. Bei einer höheren Beanspruchung erfolgt auch eine viskose Verformung der Dämpfungseinrichtung.

Bevorzugt ist die Dämpfungseinrichtung zwischen der Wandung des Akkumulators und der wenigstens einen galvanischen Zelle angeordnet. Besonders bevorzugt ist die Dämpfungseinrichtung dabei in Richtung der erwarteten mechanischen Beanspruchung angeordnet.

Weitere Vorteile, Merkmale und Anwendungsmöglichkeiten der vorliegenden Erfindung ergeben sich aus der nachfolgenden Beschreibung in Zusammenhang mit den Figuren. Es zeigt:
- Fig. 1: Eine Seitenansicht einer erfindungsgemäßen galvanischen Zelle.
- Fig. 2: Eine zur Figur 1 rechtwinkelig angeordnete Seitenansicht mit Teilschnitt einer erfindungsgemäßen galvanischen Zelle.

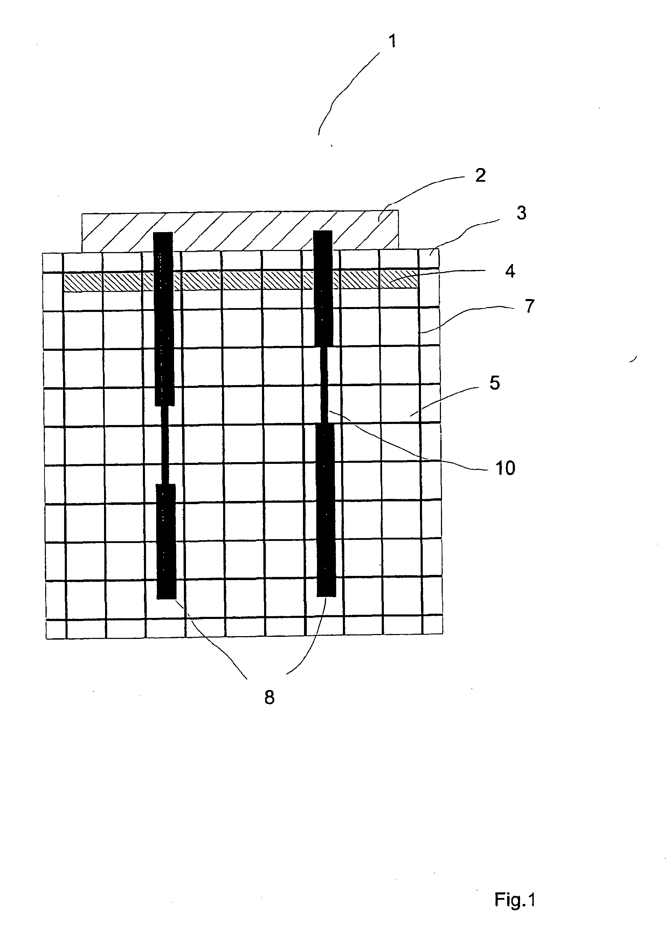

Figur 1 zeigt eine bevorzugte Ausführungsform einer erfindungsgemäßen galvanischen Zelle 1. Deren Stromableiter 2 erstreckt sich teilweise aus der Umhüllung 3. Der Stromableiter 2 ist als Kupferfolie ausgebildet und steht in elektrischer Wirkverbindung mit einer nicht dargestellten aktiven Elektrodenmasse innerhalb der Umhüllung 3. Die Umhüllung 3 ist folienartig als Schichtverbund ausgebildet. Die Umhüllung 3 weist eine erste Schicht 5 aus einer Polyethylenfolie sowie eine zweite Schicht (nicht dargestellt) aus einer Aluminiumfolie auf. Die äußere Schicht wirkt auch dem Eintritt von Wasser- bzw. Wasserdampf in das Innere der galvanischen Zelle entgegen. Die erste Schicht 5 aus Polyethylenfolie ist innerhalb der äußeren Schicht angeordnet und trennt die äußere Schicht von den Chemikalien der galvanischen Zelle 1. Die Umhüllung 3 hat die Gestalt einer Tüte und ist an drei Kanten verschlossen. Durch die offene vierte Kante sind die Innereien der galvanischen Zelle 1 eingesetzt. Die Umhüllung 3 weist einen Verbindungsbereich 4 auf. In diesem Verbindungsbereich 4 ist die Umhüllung 3 stoffschlüssig mit dem Stromableiter 2 verbunden. Die Verbindung wurde mit einem Ultraschallschweißverfahren erzeugt. So kann auch durch die offene vierte Kante der Umhüllung 3 kein Wasser bzw. Wasserdampf in das Innere der galvanischen Zelle 1 eindringen. Weiter ist den chemisch wirksamen Bestandteilen der galvanischen Zelle 1 der Austritt aus der Umhüllung 3 verwehrt.

Die ersten Schicht 5 sind fadenartige Gebilde 7 eingebettet. Bei diesen ersten fadenartigen Gebilden 7 handelt es sich um ein weitmaschiges Gewebe oder Netz aus Glasfasern, welche im Wesentlichen in Richtung auftretender Zugkräfte orientiert sind. Dieses Netz aus ersten fadenartigen Gebilden 7 dient der Aufnahme von Zugkräften. Diese treten auch auf, wenn sich die Umhüllung 3 beispielsweise in Folge einer bedeutsamen Temperaturerhöhung oder Gasbildung innerhalb der galvanischen Zelle 1 ausdehnt. Dieser Ausdehnung wirken die ersten fadenartigen Gebilde 7 entgegen.

Weiter weist die dargestellte Ausführungsform zwei erste Stromleiteinrichtungen 8 aus bahnförmigem Kupfer auf. Diese ersten Stromleiteinrichtungen 8 sind stoffschlüssig mit der Umhüllung 3 verbunden und auf einer der Außenflächen der Umhüllung 3 angeordnet. Entsprechend der Darstellung sind diese ersten Stromleiteinrichtungen 8 an ihren oberen Enden mit dem Stromableiter 2 elektrisch leitend verbunden. Nicht dargestellt ist die Weiterleitung zum elektrischen Verbraucher. Jede der ersten Stromleiteinrichtungen 8 ist mit einer Dünnstelle 10 versehen. Diese dient dazu, bei starker Erwärmung oder Dehnung bevorzugt zu versagen. Die ersten Stromleiteinrichtungen 8 sind sowohl gegenüber der Umhüllung 3 als auch gegenüber der Umgebung wenigstens elektrisch isoliert.

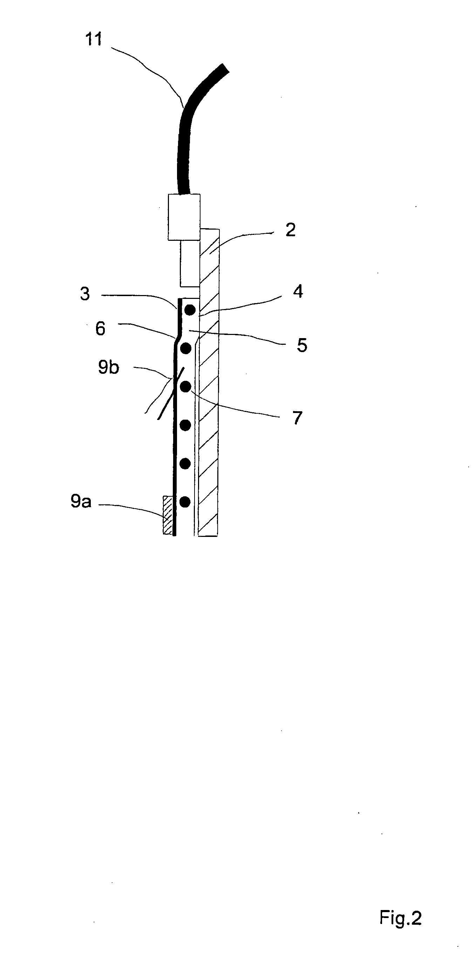

Figur 2 zeigt einen Teil einer erfindungsgemäßen galvanischen Zelle 1 im Schnitt. Dargestellt sind ein Stromableiter 2 (schraffiert) der galvanischen Zelle 1, deren Umhüllung 3, deren Zuleitung 11, an Stelle einer ersten Stromleiteinrichtung, und zwei erste Sensoreinrichtungen (9a, 9b). Die Umhüllung 3 weist eine erste Schicht 5 und eine zweite Schicht 6 auf. Die zweite Schicht 6 ist als Aluminiumfolie ausgebildet. Die erste Schicht 5 weist zwei Werkstoffe auf, ein aushärtbares Polymer sowie ein Geflecht aus ersten fadenartigen Gebilden 7.

Im Verbindungsbereich 4 ist die Umhüllung 3 mit dem Stromableiter 2 stoffschlüssig verbunden. Der Verbindungsbereich 4 ist als schmaler Streifen und als Klebverbindung ausgebildet. Außerhalb dieses Verbindungsbereichs 4 liegt die Umhüllung 3 lediglich am Stromableiter 2 bzw. den weiteren Bestandteilen der galvanischen Zelle 1 an.

Innerhalb der ersten Schicht 5 ist ein Thermoelement 9b angebracht. Die erste Sensoreinrichtung 9a dient der Feststellung, ob Elektrolyt aus dem Zellinneren durch die Umhüllung 3 getreten ist. Diese erste Sensoreinrichtung 9a ist vorteilhaft in einem unteren Bereich der Umhüllung 3 stoffschlüssig mit dieser verbunden. Beide ersten Sensoreinrichtungen 9a und 9b sind mit einer Einrichtung zur Speicherung von Signalen der ersten und zweiten Sensoreinrichtungen (nicht dargestellt) eines Akkumulators verbunden. Diese Speichereinrichtung ist mit einer Einrichtung zur Datenfernübertragung verbunden. Bei Erreichen als kritischer erachteter Messwerte ist die Übermittlung eines Warnsignals möglich.

## Patentansprüche

1. Galvanische Zelle (1) mit wenigstens einem Stromableiter (2), einer Umhüllung (3), welche die galvanische Zelle wenigstens teilweise umgibt, und einem der Umhüllung zugeordneten Verbindungsbereich (4), in welchem die Umhüllung (3) wenigstens teilweise mit dem Stromableiter (2) verbunden ist, wobei die Umhüllung (3) wenigstens eine erste Schicht (5) und eine zweite Schicht (6) aufweist,
wobei der Werkstoff der ersten Schicht (5) und der Werkstoff der zweiten Schicht (6) sich durch wenigstens einen chemischen Stoff unterscheiden,
**dadurch gekennzeichnet,**
- **dass** mit der Umhüllung (3) wenigstens eine erste, als flache metallische Ader ausgebildete Stromleiteinrichtung (8) wenigstens teilweise stoffschlüssig verbunden ist, deren elektrisch leitender Querschnitt sich bei einer Dehnung der Umhüllung verringert, so dass der elektrische Widerstand dieser Stromleiteinrichtung sich erhöht,
- **dass** diese oder wenigstens eine dieser ersten Stromleiteinrichtungen (8) wenigstens mittelbar elektrisch mit einem Stromableiter verbunden ist,
- **dass** wenigstens eine der Schichten (5, 6) der Umhüllung (3) mindestens einen ersten Werkstoff und einen zweiten Werkstoff aufweist,
- **dass** der zweite Werkstoff einen höheren Elastizitätsmodul als der erste Werkstoff aufweist, dass der zweite Werkstoff in Gestalt von Fasern ausbildet ist und dass die Fasern mit dem ersten Werkstoff wenigstens teilweise stoffschlüssig verbunden sind.

2. Galvanische Zelle (1) gemäß Anspruch 1, **dadurch gekennzeichnet, dass** die Fasern wenigstens teilweise miteinander zu wenigstens einem ersten fadenartigen Gebilde (7) verbunden sind, und mehrere erste fadenartige Gebilde (7) im Wesentlichen in Richtung einer Zugkraft angeordnet sind.

3. Galvanische Zelle (1) gemäß Anspruch 2, **dadurch gekennzeichnet, dass** das wenigstens eine fadenartige Gebilde als geschichtetes Gelege angeordnet ist, wobei die Orientierungen verschiedenener Schichten eines Geleges voneinander abweichen, vorzugsweise mit Winkeln von 30, 45, 60 oder 90 Grad zwischen den Orientierungen verschiedener Schichten.

4. Galvanische Zelle (1) gemäß dem vorhergehenden Anspruch, **dadurch gekennzeichnet,**
**dass** die wenigstens eine erste Stromleiteinrichtung (8) eine geringere Bruchdehnung aufweist, als die Umhüllung (3).

5. Galvanische Zelle (1) gemäß einem der vorhergehenden Ansprüche, **dadurch gekennzeichnet, dass** der Umhüllung (3) weiter wenigstens eine erste Sensoreinrichtung (9) zugeordnet ist.

6. Akkumulator (10) mit wenigstens einer galvanische Zelle (1) gemäß einem der vorhergehenden Ansprüche
und einer Wandung (11), welche die wenigstens eine galvanische Zelle (1) wenigstens teilweise umgibt.

7. Akkumulator (10) gemäß Anspruch 6, **dadurch gekennzeichnet,**
**dass** die Wandung (11) wenigstens einen dritten Werkstoff und einen vierten Werkstoff aufweist.

8. Akkumulator (10) gemäß einem der Ansprüche 6 bis 7, **dadurch gekennzeichnet,**
**dass** der vierte Werkstoff einen einen höheren Elastizitätsmodul als der dritte Werkstoff aufweist,
**dass** der vierte Werkstoff in Gestalt von Fasern ausbildet ist,
**dass** die Fasern mit dem dritten Werkstoff wenigstens teilweise stoffschlüssig verbunden sind,
**dass** die Fasern wenigstens teilweise miteinander zu wenigstens einem zweiten fadenartigen Gebilde (12) verbunden sind,
und **dass** mehrere zweite fadenartige Gebilde (12) im Wesentlichen in Richtung einer Zugkraft angeordnet sind.

9. Akkumulator (10) gemäß einem der Ansprüche 6 bis 8, **dadurch gekennzeichnet, dass** deren Wandung (11) weiter wenigstens eine zweite Stromleiteinrichtung (13) zugeordnet ist, welche wenigstens teilweise von der Wandung (11) umschlossen ist.

10. Akkumulator (10) gemäß einem der Ansprüche 6 bis 9, **dadurch gekennzeichnet, dass** die wenigstens eine zweite Stromleiteinrichtung (13) eine geringere Bruchdehnung aufweist, als die Wandung (11).

11. Akkumulator (10) gemäß einem der Ansprüche 6 bis 10, **dadurch gekennzeichnet, dass** der Wandung (11) weiter wenigstens eine zweite Sensoreinrichtung (14) zugeordnet ist.

12. Akkumulator (10) gemäß einem der Ansprüche 6 bis 11 mit wenigstens einer Dämpfungseinrichtung (15), welche der wenigstens einen galvanischen Zelle (1) zugeordnet ist.

## Claims

1. A galvanic cell (1) comprising at least one current conductor (2), a casing (3), which at least partially surrounds the galvanic cell, and a connecting area (4) allocated to the casing in which the casing (3) is at least partially connected to the current conductor (2), wherein the casing (3) has at least one first layer (5) and one second layer (6),
wherein the material of the first layer (5) and the material of the second layer (6) differ by at least one chemical substance,
**characterized in that**
□ at least one first current conducting device (8) configured as a flat metallic strand is at least partially materially bonded to the casing (3), the electrically conductive cross section of which reduces upon an elongation of the casing such that the electrical resistance of the current conducting device increases,
□ that said or at least one of said first current conducting devices (8) is at least indirectly electrically connected to a current conductor,
□ that at least one of the layers (5,6) of the casing (3) comprises at least one first material and one second material,
□ that the second material has a higher elastic modulus than the first material, that the second material is configured in the form of fibers, and that the fibers are at least partially materially bonded to the first material.

2. The galvanic cell (1) according to claim 1, **characterized in that** the fibers are at least partially connected to each other to form a first filamentous structure (7) and a plurality of said first filamentous structures (7) are substantially arranged in the direction of a tensile force.

3. The galvanic cell (1) according to claim 2, **characterized in that** the at least one filamentous structure is disposed as a layered non-woven fabric, wherein the different layers of a non-woven fabric differ in their orientation to one another, preferably at angles of 30, 45, 60 or 90 degrees to the orientation of the different layers.

4. The galvanic cell (1) according to the preceding claim, **characterized in that** the at least one first current conducting device (8) has a lower elongation at fracture than the casing (3).

5. The galvanic cell (1) according to any one of the preceding claims, **characterized in that** at least one first sensor device (9) is further allocated to the casing (3).

6. An accumulator (10) comprising at least one galvanic cell (1) in accordance with any one of the preceding claims and a wall (11) which at least partially surrounds at least one galvanic cell (1).

7. The accumulator (10) according to claim 6, **characterized in that** the wall (11) comprises at least one third material and one fourth material.

8. The accumulator (10) according to one of claims 6 or 7, **characterized in that**
the fourth material has a higher elastic modulus than the third material,
that the fourth material is configured in the form of fibers,
that the fibers are at least partially materially bonded to the third material,
that the fibers are at least partially connected to each other to form at least one second filamentous structure (12),
and that a plurality of second filamentous structures (12) are substantially arranged in the direction of a tensile force.

9. The accumulator (10) according to any one of claims 6 to 8, **characterized in that** at least one second current conducting device (13) which is at least partially surrounded by its wall (11) is further allocated to said wall (11).

10. The accumulator (10) according to any one of claims 6 to 9, **characterized in that** the at least one second current conducting device (13) has a lower elongation at fracture than the wall (11).

11. The accumulator (10) according to any one of claims 6 to 10, **characterized in that** at least one second sensor device (14) is further allocated to the wall (11).

12. The accumulator (10) according to any one of claims 6 to 11 comprising at least one damping device (15) allocated to the at least one galvanic cell (1).

## Revendications

1. Cellule galvanique (1) comportant au moins un conducteur de courant (2), une enveloppe (3) qui entoure au moins partiellement la cellule galvanique et une zone de liaison (4) affectée à l'enveloppe, dans laquelle l'enveloppe (3) est reliée au moins partiellement au conducteur de courant (2), l'enveloppe (3) présentant au moins une première couche (5) et une deuxième couche (6),
dans laquelle le matériau de la première couche (5) et le matériau de la deuxième couche (6) se distinguent par au moins une substance chimique,
**caractérisée en ce que**
- au moins un premier dispositif conducteur de courant (8) formé comme un conducteur métallique plat est relié au moins partiellement par adhésion de matière à l'enveloppe (3), dont la section électriquement conductrice se réduit lors d'une dilatation de l'enveloppe, de sorte que la résistance électrique de ce dispositif conducteur de courant augmente,
- ce ou au moins l'un de ces premiers dispositifs conducteurs de courant (8) est relié électriquement au moins indirectement à un conducteur de courant,
- au moins l'une des couches (5, 6) de l'enveloppe (3) présente au moins un premier matériau et un deuxième matériau,
- le deuxième matériau présente un module d'élasticité supérieur à celui du premier matériau, le deuxième matériau est constitué sous la forme de fibres et les fibres sont reliées au premier matériau au moins partiellement par adhésion de matière.

2. Cellule galvanique (1) selon la revendication 1, **caractérisée en ce que** les fibres sont reliées au moins partiellement, les unes avec les autres, à au moins une première structure (7) de type fil et plusieurs premières structures (7) de type fil sont disposées essentiellement dans la direction d'une force de traction.

3. Cellule galvanique (1) selon la revendication 2, **caractérisée en ce qu'**au moins une structure de type fil est disposée comme un tissu non tissé stratifié, dans laquelle les orientations de différentes couches d'un tissu non tissé divergent les unes des autres, de préférence avec des angles de 30, 45, 60 ou 90 degrés entre les orientations de différentes couches.

4. Cellule galvanique (1) selon la revendication précédente, **caractérisée en ce que**
l'au moins un premier dispositif conducteur de courant (8) présente un allongement à la rupture inférieur à celui de l'enveloppe (3).

5. Cellule galvanique (1) selon l'une des revendications précédentes, **caractérisée en ce qu'**en outre, au moins un premier dispositif de capteur (9) est affecté à l'enveloppe (3).

6. Accumulateur (10) comportant au moins une cellule galvanique (1) selon l'une des revendications précédentes, et une paroi (11) qui entoure au moins partiellement l'au moins une cellule galvanique (1).

7. Accumulateur (10) selon la revendication 6, **caractérisé en ce que** la paroi (11) présente au moins un troisième matériau et un quatrième matériau.

8. Accumulateur (10) selon l'une des revendications 6 à 7, **caractérisé en ce que**
le quatrième matériau présente un module d'élasticité supérieur à celui du troisième matériau,
le quatrième matériau est conçu sous la forme de fibres,
les fibres sont reliées au moins partiellement par adhésion de matière au troisième matériau,
les fibres sont reliées au moins partiellement, les unes avec les autres, à au moins une deuxième structure de type fil (12),
et **en ce que** plusieurs deuxièmes structures de type fil (12) sont disposées essentiellement dans la direction d'une force de traction.

9. Accumulateur (10) selon l'une des revendications 6 à 8, **caractérisé en ce qu'**à sa paroi (11) est affecté en outre au moins un deuxième dispositif conducteur de courant (13) qui est entouré au moins partiellement par la paroi (11).

10. Accumulateur (10) selon l'une des revendications 6 à 9, **caractérisé en ce que** l'au moins un deuxième dispositif conducteur de courant (13) présente un allongement à la rupture plus faible que la paroi (11).

11. Accumulateur (10) selon l'une des revendications 6 à 10, **caractérisé en ce qu'**à la paroi (11) est affecté en outre au moins un deuxième dispositif de capteur (14).

12. Accumulateur (10) selon l'une des revendications 6 à 11 comportant au moins un dispositif d'atténuation (15) qui est affecté à l'au moins une cellule galvanique (1).
